# EUROPÄISCHE PATENTSCHRIFT

(11) **EP 1 453 872 B1**
(45) Veröffentlichungstag und Bekanntmachung des Hinweises auf die Patenterteilung: **13.04.2016**
(21) Anmeldenummer: 03743311.7
(22) Anmeldetag: 14.02.2003
(51) Int. Cl.: C08F 220/18, C10G 73/04

(54) **COPOLYMERE ALS DEWAXING-ADDITIVE**
COPOLYMERS AS DEWAXING ADDITIVES
COPOLYMERES UTILISES COMME ADDITIFS DE DEPARAFFINAGE

(30) Priorität: 01.03.2002 DE 10208799
(43) Veröffentlichungstag der Anmeldung: 08.09.2004
(73) Patentinhaber: Evonik Oil Additives GmbH, 64293 Darmstadt (DE)
(72) Erfinder: SCHERER, Markus, 66822 Lebach (DE); MUELLER, Michael, 64625 Bensheim (DE); HERBEAUX, Jean-Luc, Singapore 239192 (SG); JANSSEN, Dieter, 64823 Gross-Umstadt (DE); CROESSMANN, Melanie, 64372 Ober-Ramstadt (DE)
(86) Internationale Anmeldenummer: PCT/EP2003/001472
(87) Internationale Veröffentlichungsnummer: WO 2003/074578

(56) Entgegenhaltungen:
- EP-A- 0 682 046
- EP-A- 1 086 964
- EP-A2- 0 415 199
- GB-A- 906 412
- GB-A- 2 160 536
- US-A- 3 853 778

## Beschreibung

### Gebiet der Erfindung:

Die Erfindung betrifft Polymergemische, die zur Herstellung von Additiven zur Solvententparaffinierung von paraffinhaltigen Mineralöldestillaten geeignet sind, daraus hergestellte Dewaxing-Additive sowie deren Verwendung bei der Solvententparaffinierung von paraffinhaltigen Mineralöldestillaten.

### Stand der Technik:

US-P 4,451,353 beschreibt Mischungen aus einem Poly-C₁₀-C₂₈-alkylacrylat und einem Poly-n-alkylmethacrylat (C₁₀-C₂₀) als Dewaxing Additive. Es wird allerdings auf die ausschließliche Verwendung linearer Polyalkylmethacrylate als Mischkomponente hingewiesen.

In der DE-A-3933376 wurde gezeigt, dass bei Verwendung von Polyalkylmethacrylat-Mischkomponenten mit hohen Verzweigungsgraden der Alkylreste eine bessere Wirksamkeit und ausgepägtere synergistische Effekte auftreten als mit linearen Systemen.

In Tanasescu et al. (Rev. Chim. (Bucharest) 1998, 49(9), 593-597) ist die Evaluierung von Copolymeren aus C₁₀₋₁₈-Methacrylaten und Styrol als Dewaxing Aids in Methylethylketon/Toluol-Gemischen erwähnt. Allerdings wird auf die verschlechterte Wirksamkeit der styrolhaltigen Polymere im Vergleich zu den rein Methacrylat-basierten Additiven verwiesen und dies mit einem "Verdünnungseffekt" in Bezug auf die wirksamen Alkylseitengruppen erklärt. Polymere mit Seitenketten >C₁₈, also u.a. Behenyl(meth)acrylate, finden keine Erwähnung.

EP0682046B1 betrifft Viskositätsindexverbesserer als Additive für Schmieröle, beschreibt aber nicht Polymergemische wie in der vorliegenden Anmeldung. Weiterhin werden andere Verwendungen als in der vorliegenden Erfindung beschrieben.

GB906412A offenbart Polymere, erhältlich durch Polymerization von Mono- oder Di-Estern ungesättigter Dicarbonsäuren. Polymergemische enthaltend Styrol sind nicht beschrieben. Weiterhin werden andere Verwendungen als in der vorliegenden Erfindung beschrieben.

EP1086964A2 beschreibt Polyalkyl(meth)acrylate, die sich in der Zusammensetzung von denen der vorliegenden Erfindung unterscheiden. Weiterhin werden andere Verwendungen als in der vorliegenden Erfindung beschrieben.

GB2160536A betrifft Polymeradditive zur Inhibierung von Paraffinablagerungen und Verbesserung der Fließeigenschaften von Rohöl. Die offenbarte Polymergemische enthalten kein Styrol.

GB2305185A offenbart Maleinsäureanhydrid-Copolymere, die sich strukturell von den Polymergemischen der vorliegenden Erfindung unterscheiden.

GB1145427A beschreibt Homopolymere von Acrylacrylaten. Es werden keine Polymergemische wie in der vorliegenden Erfindung beschrieben.

EP0415199A2 und US3853778A beschreiben Copolymere bestehend aus Styrol und Behenylacrylat. Polymergemische wie in der vorliegenden Erfindung werden nicht beschrieben.

### Aufgabe und Lösung:

Aufgabe der vorliegenden Erfindung ist es, Polymergemische mit verbesserter Wirksamkeit bei der Solvententparaffinierung von paraffinhaltigen Mineralöldestillaten zur Verfügung zu stellen, insbesondere bei Verwendung in verschiedenen Feedstocks und unter Verwendung verschiedener Lösungsmittelsysteme. Insbesondere sollten die wirkungsvolleren "Dewaxing Aids" möglichst auf der Basis an sich bekannter Ausgangsstoffe zur Verfügung gestellt werden, die keine wesentlichen Änderungen bei der Durchführung der Entparaffinierungstechnologie von Erdölen bzw. Erdölprodukten mit sich bringen sollten.

Diese und weitere nicht explizit genannten Aufgaben werden gelöst durch Polymergemische, dadurch gekennzeichnet, dass sie ein oder mehrere Copolymeren bestehend aus radikalisch polymerisierbaren Monomeren der nachstehenden Formeln A und B: 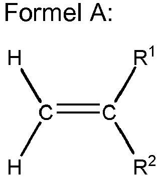 wobei
R¹ = H,
R² = phenyl, 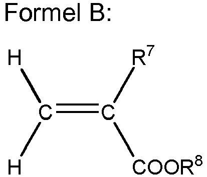
wobei R⁷ = H oder CH₃
und der Rest R⁸ = lineare oder verzweigte Alkylreste mit C₁₈-C₂₄,
und ein oder mehrere weitere Homo oder Copolymere, die Polyalkylmethacrylate sind und Alkylsubstituenten der Kettenlänge C₁-C₂₄ aufweisen,
enthälten.

Weitere ebenfalls geeignete Lösungen sowie geeignete Verwendungen der erfindungsgemäßen Polymergemische werden in den Unteransprüchen beschrieben.

### Durchführung

Die Polymerisation der Monomeren kann ebenfalls in an sich bekannter Weise durchgeführt werden.

Vorteilhafterweise wird die radikalische Polymerisation in einem mit dem zu entparaffinierenden Substrat kompatiblen Lösungsmittel, wie z. B. in Mineralöl vorgenommen. Man verwendet übliche Polymerisationsinitiatoren wie z. B. Perverbindungen, insbesondere Perester wie z. B. tert.Butylperpivalat, tert.Butylperoctoat, tert.Butylperbenzoat u.ä. in den üblichen Mengen, beispielsweise 0,1 bis 5, vorzugsweise 0,3 bis 1 Gew.-% bezogen auf die Monomeren (vgl. Th. Völker, H. Rauch-Puntigam, Acryl- und Methacrylverbindungen, Springer-Verlag 1967).

Ebenfalls in an sich bekannter Weise können den Ansätzen Molekulargewichtsregler, insbesondere Mercaptane wie z. B. Dodecylmercaptan in den üblichen Mengen, beispielsweise 0,01 bis 2 Gew.-% bezogen auf die Monomeren, zugesetzt werden.

Zweckmäßigerweise arbeitet man unter einem Schutzgas wie z. B. CO₂, Stickstoff oder Argon.

Man geht zweckmäßig so vor, dass man die Monomeren in einem geeigneten mit Rührer ausgestatteten Polymerisationsgefäß im Lösungsmittel löst, gegebenenfalls zusammen mit Regler und Initiator und zunächst entgast, beispielsweise mittels CO₂-Schnee, und anschließend erwärmt.

Als Anhalt können z. B. 80°C ± 10 °C gelten. Der Initiator kann fallweise auch der erwärmten Mischung zugesetzt werden. Gegebenenfalls wird weiteres Monomeres und Initiator sowie Regler zudosiert. Die Temperatur steigt in der Regel weiter an, beispielsweise auf 140°C ± 10 °C. Gegebenenfalls können durch Wärmezufuhr und/oder weitere Initiatorzugabe für die Nachpolymerisation geeignete Bedingungen hergestellt werden. Die Gesamtpolymerisationsdauer liegt im allgemeinen unter 12 Stunden.

In einer vorteilhaften Ausführungsform enthalten die erfindungsgemäßen (Co)polymere einen Gewichtsanteil des Monomers A am Gesamtgewicht des Copolymers von 0,1 - 70%, vorzugsweise von 0,5 - 50% und besonders bevorzugt von 5 - 30%.

Das erfindungsgemäße Polymergemisch enthält neben einem oder mehreren der zuvor beschriebenen Copolymeren auch noch ein oder mehrere weitere Homo- oder Copolymere enthalten, die Polyalkylmethacrylate sind und Alkylsubstituenten der Kettenlänge C₁-C₂₄ oder der Kettenlänge C₁₂-C₁₈.

Bei diesem Polymergemisch ist das Verhältnis der Copolymere und der weiteren Homo- oder Copolymere vorteilhafterweise von 1 : 20 bis 20 :1, vorzugsweise von 1 : 10 bis 10 : 1 und besonders bevorzugt von 1 : 5 bis 5 : 1.

Das im Polymergemisch gegebenenfalls enthaltene weitere Homo- oder Copolymere ist in einer vorteilhaften Ausführungsform ein Polyalkylmethacrylat, welches bis zu 20 Gew.% C₁-C₁₀-Methacrylate enthält.

Die Bestimmung des Molekulargewichts kann mittels Gelpermeationschromatographie vorgenommen werden. (Vgl. Kirk-Othmer, Encyclopedia of Chemical Technology, 3rd. Ed., Vol. 18, pg. 209, 749, J. Wiley 1982).

Die Herstellung der Polymerkomponenten kann in an sich bekannter Weise im Batchverfahren, wobei sämtliche verwendete Monomere in die Vorlage gegeben werden, oder im Zulaufverfahren erfolgen. Die Herstellung kann auch in einem Zulaufverfahren erfolgen, wobei zumindest eines der Polymere des Polymergemischs synthetisiert wird, wobei zumindest die Konzentration eines der verwendeten Monomere in der Monomervorlage im Vergleich zu den anderen verwendeten Monomersorten erhöht ist mit dem Ziel ein Polymergemisch herzustellen, in welchem bezüglich der Monomerzusammensetzung unterschiedliche Polymere vorliegen.

Die Polymergemische gemäß der vorliegenden Erfindung dienen der Herstellung von Dewaxing-Additiven, wobei gegebenenfalls weitere übliche Zusatzstoffe für Dewaxing-Additive zugesetzt werden.

Insbesondere können die Dewaxing-Additive eine Lösung der Copolymere oder des Polymergemischs in einem Öl vom paraffinischen oder naphthenischen Typ oder aber in einem organischen Lösemittel sein.

Hierbei ist in einer bevorzugten Ausführungsform das organische Lösungsmittel Toluol, Xylol und/oder Naphtha.

Hinsichtlich der zur Entparaffinierung geeigneten wachshaltigen Substrate auf Erdölbasis ist keine ausgesprochene Limitierung des Verfahrens zu erkennen, jedoch kommen unter praktischen Gesichtspunkten insbesondere wachshaltige Destillatöle infrage, insbesondere solche mit Siedebereich ca. 300 bis ca. 600 °C, einer Dichte von ca. 0.08 - 0.09 g/cc bei 15 °C, einer Viskosität von ca. 10 - 20 cSt/100 °C einem "Pour Point" von ca. 30 - 50 °C und einem Wachsgehalt (trocken) von ca. 10 - ca. 25 Gew.-%.
Von besonderer Bedeutung sind Destillatöle derjenigen Fraktionen, die Schmieröle und Spezialöle im Siedebereich 300 - 600 °C einschließen, insbesondere solche mit einem mittleren Siedepunkt von ca. 400 - 450 °C.

Die erfindungsgemäß zur Lösungsmittel-Entparaffinierung eingesetzten Lösungsmittel entsprechen ebenfalls den üblicherweise verwendeten. Es handelt sich z. B. um:
aliphatische Kohlenwasserstoffe mit einem Siedepunkt < 150 °C bei Normaldruck, darunter die selbstkühlenden Gase wie Propan, Propylene, Butan, Pentan, ferner Isooctan, aromatische Kohlenwasserstoffe wie z. B. Toluol, Xylol, Ketone wie z. B. Aceton, Dimethylketon, Methylethylketon, Methylpropylketon, Methylisobutylketon, gegebenenfalls auch halogenierte Kohlenwasserstoffe wie Methylenchlorid, Dichlorethan oder N-Alkylpyrrolidone wie N-Methylpyrrolidon, N-Ethylpyrrolidon.

Vorteilhaft sind auch Gemische von Lösungsmitteln, beispielsweise von Ketonen und aromatischen Kohlenwasserstoffen wie Methylethylketon/Toluol oder Methylisobutylketon/Toluol.

Der Zusatz an Lösungsmitteln L bei dem erfindungsgemäßen Verfahren erfolgt in den üblichen Mengen, beispielsweise 0,5 - 10 Volumteile, vorzugsweise 2 - 7 Volumteile bezogen auf das zu entparaffinierende Substrat.

Bei der Verwendung eines Dewaxing-Additivs zur Solvententparaffinierung von paraffinhaltigen Mineralöldestillaten ist die Zusatzrate des Polymergemisches im Dewaxing-Verfahren von 0,005 - 0,5% ppm, insbesondere von 0,01 - 0,3% ppm oder von 0,05 - 0,18% ppm.

Unerwarteterweise wurde gefunden, dass Copolymere aus Alkylacrylaten, insbesondere Behenylacrylat (= C₁₈₋₂₄), und Styrol in verschiedenen Feedstocks und unter Verwendung verschiedener Lösungsmittelsysteme effektivere Dewaxing Aids sind als entsprechende styrolfreie Polymere. Letztere Systeme entsprechen dem Stand der Technik. Dies gilt sowohl für den Vergleich zwischen Einzelkomponenten, also Poly-behenylacrylat-co-styrol mit Polybehenylacrylat, als auch für den Vergleich zwischen styrolhaltigen und styrolfreien Mischkomponenten. So ist ein Polybehenyl-co-styrol / Polymethacrylat Mischsystem wirksamer als eine Polybehenyl /Polymethacrylat Mischung. Verbesserungen im Vergleich zu den bisher bekannten Mischkomponenten werden in Gegenüberstellungen mit Mischsystemen enthaltend lineare Poly-alkyl-methacrylate wie in USP 4 451 353 beschrieben aber auch in der Gegenüberstellung mit Mischsystemen enthaltend verzweigte Poly-alkyl-methacrylate deutlich.

Es wurde ebenso gefunden, dass neben Styrol auch der Einbau anderer Monomere in Copolymere mit Behenylacrylat zu neuen Dewaxing-Additiven führt, die in ebenso unerwarteterweise wie die Styrolsysteme zu verbesserten Dewaxing-Ergebnissen im Vergleich zum Stand der Technik führen. So waren beispielsweise Copolymere zusammengesetzt aus Behenylacrylat und jeweils n-Butylmethacrylat, iso-Nonylmethacrylat oder Benzylmethacrylat durchweg besser als Polybehenylacrylatpolymere.

Die gemachten Aussagen werden durch die im folgenden beschriebenen Beispiele, insbesondere anhand der gemessenen Filtrationsgeschwindigkeiten, manifestiert.

Beispiel 9 zeigt dass eine Mischung aus dem Styrol/Behenylacrylatcopolymer P1 mit dem Polymethacrylat P7 (P7 als C₁₂-C₁₈-Polymethacrylat mit linearen Seitenketten) in einem 600N-Feedstock einer europäischen Raffinerie geringere Filtrationszeiten ermöglichte im Vergleich mit der Mischung des styrolfreien Analogons V1 mit Polymer P7. Ebenso war eine Mischung aus P1 und P8 (P8 ist ein C₁₂-C₁₈-Polymethacrylat mit stärker verzweigten Seitenketten als P7) in diesem Feedstock deutlich besser als die dem Stand der Technik entsprechende Mischung des styrolfreien V1 mit P8. Ein weiteres Beispiel, welches die verbesserte Wirksamkeit eines styrolhaltigen Additivs belegt, liefert eine Mischung aus P1 und dem C₁₆-C₁₈-Polymethacrylat P6 in Gegenüberstellung zur Vergleichsprobe bestehend aus einer Mischung aus V1 und P6, ebenfalls im europäischen 600N-Feedstock. Ebenso ist in Beispiel 11 klar erkennbar, dass auch die Einzelkomponente P1 geringere Filtrationszeiten im Vergleich zur Vergleichsprobe V1 erbrachte.

Die gewonnene Erkenntnis zu styrolhaltigen Systemen wurde anhand von Untersuchungen in zwei alternativen Feedstocks zusätzlich untermauert (s. Beispiele 10 und 11). Dewaxing-Studien durchgeführt in n-Heptan in einem 500N-Feedstock einer thailändischen Raffinerie (Beispiel 10) belegen, dass Filtrationszeiten resultierend aus 3:8-Mischungen von P1 mit P6 bzw. 3:8-Mischungen aus P1 mit P7 in beiden Fällen geringer waren im Vergleich zu einer Mischung bestehend aus V1 und P6. Beispiel 11 gibt eine Dewaxing-Studie durchgeführt mit einem 300N-Feedstock einer Raffinerie aus Südamerika wieder. Dieses Beispiel belegt, dass das hier vorgestellte Prinzip nicht nur auf zusätzliche Feedstocks, sondern auch auf alternative Lösungsmittelsysteme auszuweiten ist. Filtrationsexperimente in Methylethylketon/Toluol zeigen, dass eine P1/P6-Mischung im Vergleich zu einer Mischung aus V1 und V6 zu verbesserten Filtrationszeiten führt.

Bei der Herstellung von Schmierölen werden die Waschdestillate aus der Vakuumdestillation des Rohöls zunächst durch Lösungsmittelextraktion von Aromaten und Heterocyclen befreit. Dies bewirkt eine Verbesserung der Alterungsstabilität und des Viskositätsindex. Die Raffinate enthalten noch große Mengen an Paraffinwachs und haben entsprechend hohe Stockpunkte. Deshalb wird das Paraffin durch Lösungsmittelentparaffinierung zum größten Teil entfernt. Man versetzt dazu das Raffinat mit einem geeigneten Lösungsmittel - eingesetzt werden z.B. Methylethylketon-Toluol- und Dichlorethan-Dichlormethan-Gemische oder auch Propan. Dann kühlt man auf Temperaturen unter -20°C ab und trennt das auskristallisierte Paraffinwachs über Trommelfilter ab. Paraffin-Kristallblättchen, wie sie ohne Zusatz von Additiven entstehen, setzen die Filter zu und schließen größere Mengen Öl ein (Slack-Wax). Folglich ist die Filtrationsgeschwindigkeit bei der Entparaffinierung oftmals gering und die Ölausbeute nicht optimal. Man kann durch Variation der Verfahrensparameter wie Abkühlgeschwindigkeit, Zusammensetzung des Lösungsmittelgemisches, Filtrationstemperatur und Verdünnungsgrad entgegenwirken. Eine Prozessoptimierung lässt sich jedoch auch durch Einsatz polymerer Entparaffinierungshilfsmittel (Dewaxing Aids) erzielen. Solche Dewaxing Aids beeinflussen Größe und Form der Paraffinkristalle, so dass kompakte Strukturen entstehen, die einen porösen, für das Lösungsmittel-Öl-Gemisch durchlässigen Filterkuchen bilden. Filtrationsgeschwindigkeit und Ölausbeute lassen sich so beträchtlich erhöhen.

Aus der Literatur ist bekannt, dass insbesondere kompakte Assoziate vieler Paraffinkriställchen, die epitaktisch z.B. auf Vesikel aus Polyalkylacrylaten aufwachsen, Filterkuchen idealer Textur und hoher Porosität bilden.

Polyalkylmethacrylate und Polyalkylacrylate, welche keine anderen Monomersorten als Methacrylate oder Acrylate enthalten, sind sowohl in Patenten als auch in der sonstigen Literatur eingehend als Dewaxing Aids beschrieben. Es werden sowohl Einzelkomponenten als auch Mischungen verschiedener Poly(meth)acrylatsysteme als effektive Dewaxing Aids vorgestellt

### Durchführung eines Laborfiltrationstests zur Bestimmung der Filtrationsaeschwindiakeit:

Um eine Auswahl geeigneter Polymere im Labor durchführen zu können, haben wir eine Laborfiltrationsapparatur entwickelt, die uns die Messung von Ölausbeute und Filtrationsgeschwindigkeit erlaubt. Insbesondere die Filtrationsgeschwindigkeit erwies sich als wichtiges Kriterium zur Auswahl geeigneter Dewaxing Aids.

Die Filtrationsapparatur besteht aus einem Stahlfilter mit Deckel und Kühlmantel und wird mit Hilfe eines Kryostaten im Umlauf gekühlt. Es wird Filtertuch aus der Entparaffinierungsanlage der Raffinerie verwendet. Das Filtervolumen beträgt 100 ml. Der Filter ist über einen Glasaufsatz mit 2-Wegehahn mit einem Messzylinder verbunden. Mittels einer Öl-Drehschieberpumpe, einem Druckminderventil und einem Manometer kann ein definiertes Vakuum an die Filtrationsapparatur angelegt werden. Das zu entparaffinierende Mineralöldestillat wird in der Wärme typischerweise bei 70°C, aber in jedem Falle oberhalb des Cloud Points, mit den Entparaffinierungs-Lösungsmitteln sowie den Dewaxing Aids versetzt und gerührt bis eine klare Lösung resultiert. Dann wird mit Temperatursteuerung mit definierter Geschwindigkeit auf die gewünschte Filtrationstemperatur abgekühlt. Der Filter wird auf diese Temperatur vorgekühlt.

Sämtliche Filtrationsbedingungen wie Lösungsmittel:Feedsstock-Verhältnis, Verhältnis der Lösemittel im Falle der Verwendung von Lösungsmittelgemischen, Abkühlraten und Filtrationstemperaturen entsprechen denen in der jeweiligen Raffinerie angewandten Bedingungen.

Nach Erreichen der Filtrationstemperatur wird das Gemisch in den vorgekühlten Filter überführt und das Vakuum wird angelegt. Es wird typischerweise bei einem Unterdruck von 300 bis 700 mbar gearbeitet. Das Filtrationsvolumen wird dann in Abhängigkeit von der Zeit bestimmt. Die Filtration ist beendet, wenn keine Flüssigkeit mehr durch das Filtertuch dringt.

Die Additive wurden in den Dewaxing-Experimenten als Polymerlösungen in Öl wie nach den nachfolgenden Beispielen hergestellt eingesetzt. Alternativ können andere Lösemitteltypen als Trägermedien der Dewaxing-Aids Verwendung finden ohne dass hierdurch Unterschiede in Wirksamkeiten festgestellt werden.

### Beispiele

Das verwendete Behenylacrylat wurde von Sidobre Sinova bezogen und direkt ohne weitere Aufreinigung verwendet. Eine typische C-Zahlenverteilung im Behenylrest entspricht C₁₈ (40,0 - 46,0%), C₂₀ (8,0 - 14,0%), C₂₂ (42,0 - 48,0%). Die Bezugsquelle der anderen Methacrylatmonomertypen ist in den nachfolgenden Herstellvorschriften mitangegeben. Die Angaben der Viskositäten erfolgt nach η_{sp/}c (CHCl₃, 20°C).

### Beispiel 1

### Herstellung eines Copolymeren aus Behenylacrylat und Styrol P1

In einem Dreihalskoben ausgestattet mit Säbelrührer und Rückflusskühler werden 306 g Behenylacrylat (z.B. Behenyl Acrylat 45% der Sidobre Sinova), 34 g Styrol, 60 g 100 N-Öl und 0,34 g Dodecylmercaptan unter Stickstoffschutzgasatmosphäre vorgelegt und auf 80°C erwärmt. Anschließend werden 0,64 g t-Butylperpivalat und 0,38 g t-Butylperbenzoat zugegeben, um die Polymerisation zu starten. 2 Stunden nach Erreichen der Temperaturspitze werden 0,68 g t-Butylperbenzoat zugegeben und bei 130°C 10-12 Stunden nachpolymerisiert.
M_{w} (GPC, PMMA-Eichung) = 490000 g/mol
ηₛₚ/C (CHCl₃, 20°C) = 50,7 ml/g
Verdickungswirkung (4,5% in einem 150 N-Öl): 12,68 mm²/s

### Beispiel 2

### Herstellung eines Copolymeren aus Behenylacrylat und Benzylmethacrylat P2

In einem Dreihalskoben ausgestattet mit Säbelrührer und Rückflusskühler werden 306 g Behenylacrylat (z.B. Behenyl Acrylat 45% der Sidobre Sinova), 34 g Benzylmethacrylat (Hersteller: Röhm GmbH & Co. KG, Darmstadt), 60 g 100 N-Öl und 0,51 g Dodecylmercaptan auf 80°C erwärmt. Anschließend werden 0,64 g t-Butylperpivalat und 0,38 g t-Butylperbenzoat zugegeben, um die Polymerisation zu starten. 2 Stunde nach Erreichen der Temperaturspitze werden 0,68 g t-Butylperbenzoat zugegeben und bei 130°C 10-12 Stunden nachpolymerisiert.
M_{w} (GPC, PMMA-Eichung) = 645000 g/mol
ηₛₚ/C (CHCl₃, 20°C) = 48,9 ml/g
Verdickungswirkung (4,5 Gew.% in einem 150 N-Öl): 12,84 mm²/s

### Beispiel 4

### Herstellung eines Copolymeren aus Behenylacrylat und n-Butylmethacrylat P4

In einem Dreihalskoben ausgestattet mit Säbelrührer und Rückflusskühler werden 229,5 g Behenylacrylat (z.B. Behenyl Acrylat 45% der Sidobre Sinova), 25,5 g n-Butylmethacrylat (Hersteller: Röhm), 45 g 100 N-Öl und 0,255 g Dodecylmercaptan auf 80°C erwärmt. Anschließend werden 0,48 g t-Butylperpivalat und 0,29 g t-Butylperbenzoat zugegeben, um die Polymerisation zu starten. 2 Stunden nach Erreichen der Temperaturspitze werden 0,60 g t-Butylperbenzoat zugegeben und bei 130°C 10-12 Stunden nachpolymerisiert.
M_{w} (GPC, PMMA-Eichung) = 474000 g/mol
ηₛₚ/C (CHCl₃, 20°C) = 52,1 ml/g
Verdickungswirkung (4,5 Gew.% in einem 150 N-Öl): 13,09 mm²/s

### Beispiel 5

### Herstellung eines Copolymeren aus Behenylacrylat und Isononylmethacrylat P5

In einem Dreihalskoben ausgestattet mit Säbelrührer und Rückflusskühler werden 229,5 g Behenylacrylat (z.B. Behenyl Acrylat 45% der Sidobre Sinova), 25,5 g Isononylmethacrylat (z.B. das mittels Umesterung ausgehend von Methylmethacrylat hergestellte Methacrylat des Isononylalkohols der Oxeno Olefinchemie GmbH, Marl), 45 g 100 N-Öl und 0,255 g Dodecylmercaptan auf 80°C erwärmt. Anschließend werden 0,48 g t-Butylperpivalat und 0,29 g t-Butylperbenzoat zugegeben, um die Polymerisation zu starten. 2 Stunden nach Erreichen der Temperaturspitze werden 0,60 g t-Butylperbenzoat zugegeben und bei 130°C 10-12 Stunden nachpolymerisiert.
M_{w} (GPC, PMMA-Eichung) = 503000 g/mol
ηₛₚ/C (CHCl₃, 20°C) = 48,1 ml/g
Verdickungswirkung (4,5 Gew.% in einem 150 N-Öl): 13,12 mm²/s

### Beispiel 6

### Herstellung von Poly(C16-18-Alkylmethacrylat) P6

In einem Dreihalskoben ausgestattet mit Säbelrührer und Rückflusskühler werden 5,0 g 100 N-Öl unter Stickstoffschutzgasatmosphäre vorgelegt und auf 120°C erwärmt. Anschließend wird eine Mischung aus 113,6 g C₁₆₋₁₈-Alkylmethacrylat (z.B. das mittels Umesterung ausgehend von Methylmethacrylat hergestellte Methacrylat des TA1618E-Alkohols von Procter&Gamble), 17,4 g 100 N-Öl, 0,56 g t-Butylper-2-ethyl-hexanoat und 0,12 g Dodecylmercaptan innerhalb von 60 Minuten zudosiert. Nach 0,5 Stunden werden weitere 0,75 g t-Butylper-2-ethyl-hexanoat zugegeben und es wird 10-12 Stunden nachpolymerisiert. Nach Polymerisationsende wird mit 264,0 g 100 N-Öl verdünnt.

Verdickungswirkung (15 Gew.% in einem 150 N-Öl): 12,83 mm²/s

### Beispiel 7

### Herstellung eines Poly(C12-18-alkylmethacrylats) P7

In einem Polymerisationskessel werden 1350 kg C16-18-Alkylmethacrylat (z.B. das mittels Umesterung ausgehend von Methylmethacrylat hergestellte Methacrylat des Alkohols TA1618E von Procter&Gamble), 3150 kg C₁₂₋₁₄-Alkylmethacrylat (z.B. das mittels Umesterung ausgehend von Methylmethacrylat hergestellte Methacrylat des Alkohols Lorol Spezial von Cognis), 1125 kg 100N-ÖI sowie 1,9 kg Dodecylmercaptan vorgelegt und die Mischung auf 120°C erwärmt. Eine Lösung von 4 kg t-Butylper-2-ethyl-hexanoat in 200 kg 100N-ÖI wird vorbereitet und dem Monomergemisch in drei aufeinanderfolgenden Dosierschritten zugegeben. Im ersten Schritt wird über 1 Stunde mit einer Dosierrate von 40 kg/h, im zweiten Dosierschritt über einen Zeitraum von 40 Minuten mit einer Dosierrate von 60 kg/h Initiator zugegeben. 4,5 kg t-Butylper-2-ethyl-hexanoat werden in der restlichen Initiatorlösung gelöst und die resultierende Lösung innerhalb von 45 Minuten mit einer Dosierrate von 164 kg/h addiert. Man lässt ca. 1 Stunde nachpolymerisen

### Beispiel 8

### Herstellung von Poly(C₁₂₋₁₈-alkylmethacrylat) P8

In einem Dreihalskoben ausgestattet mit Säbelrührer und Rückflusskühler werden 17,8 g C₁₂₋₁₈-Alkylmethacrylat (z.B. auf Basis eines 78:22-Gemisches der jeweils mittels Umesterung ausgehend von Methylmethacrylat hergestellten Methacrylate des Alkohols Neodol 25E von Shell Chemicals und des Alkohols TA1618E von Procter&Gamble) sowie 160 g 100 N-Öl unter Stickstoffschutzgasatmosphäre vorgelegt und auf 85°C erwärmt. Anschließend werden 1,8 g t-Butylper-2-ethylhexanoat zugegeben, um die Polymerisation zu starten. Gleichzeitig wird mit Zudosierung eines Gemisches aus 622,2 g C₁₂₋₁₈-Alkylmethacrylat und 1,6 g t-Butylper-2-ethylhexanoat begonnen und über 3,5 Stunden zudosiert. Nach weiteren 2 Stunden wird mit 1,28 g t-Butylper-2-ethylhexanoat bei 85°C 10-12 Stunden nachpolymerisiert. Nach Polymerisationsende wird mit 800 g 100 N-Öl verdünnt.

Verdickungswirkung (10% in einem 150 N-Öl): 16,31 mm²/s

### Beispiel 9

### Filtrationsvolumina in ml aus einer Entparaffinierungsstudie mit einem 600N-Feedstock einer europäischen Raffinerie mit neuen styrolhaltigen Copolymeren

Lösemittelsystem: n-Heptan
Feedstock : Lösemittel-Verhältnis = 1:2
Durchführung: 1) Mischen bei 70°C, 2) 30 min im Bad bei 25°C, 3) 60 min im Bad bei -30°C
Filtrationstemperatur: -30°C

| Filtrationszeit [s] | Kein Additiv | P6 (800 ppm) + P1 (300 ppm) | P6 (800 ppm) + V1 (300 ppm) | P7 (1370 ppm) + P1 (200 ppm) | P7 (1370 ppm) + V1 (200 ppm) | P8 (1230 ppm) + P1 (200 ppm) | P8 (1230 ppm) + V1 (200 ppm) |
|---|---|---|---|---|---|---|---|
| 0 | 0 | 0 | 0 | 0 | 0 | 0 | 0 |
| 10 | 1 | 7 | 3 | 9 | 6 | 5 | 2 |
| 20 | 2 | 9 | | 14 | 8 | 9 | 3 |
| 30 | 2 | 10 | 8 | 17 | 11 | 10 | 4 |
| 40 | 3 | 11 | 9 | 19 | 13 | 12 | 5 |
| 50 | 3,5 | 12 | 9 | 21 | 14 | 13,5 | 6 |
| 60 | 4 | 13 | 9,5 | 23 | 15 | 14,5 | 7 |
| 70 | 5 | 14 | 10 | 24,5 | 17 | 15,5 | 8 |
| 80 | 5,5 | 15 | 10,5 | 26 | 18 | 16,5 | 9 |
| 90 | 6,5 | 16 | 11 | 27,5 | 19 | 17,5 | 9,5 |
| 100 | 7 | 16,5 | 11 | 28 | 20 | 18 | 10 |
| 120 | 8 | 18 | 12 | 30,5 | 22 | 20 | 10 |
| 140 | 8,5 | 19,5 | 12,5 | 33 | 23,5 | 21 | 11 |
| 160 | 9,5 | 21 | 13 | 36 | 25 | 22,5 | 11 |
| 180 | 10 | 22 | 14 | 37,5 | 27 | 23,5 | 12 |
| 200 | 10 | 23,5 | 15 | 39,5 | 28 | 25 | 12,5 |
| 240 | 11 | 25 | 16 | 42,5 | 30 | 27 | 13 |
| 300 | 12 | 28,5 | 18 | 47,5 | 34 | 30 | 15 |
| 600 | 16 | 39 | 24,5 | 69,5 | 47 | 41 | 20 |

### Beispiel 10

### Filtrationsvolumina in ml aus einer Entparaffinierungsstudie mit einem 500N-Feedstock einer thailändischen Raffinerie

Lösemittelsystem: n-Heptan
Feedstock : Lösemittel-Verhältnis = 1:2
Durchführung: 1) Mischen bei 70°C, 2) 30 min im Bad bei 25°C, 3) 90 min im Bad bei -30°C
Filtrationstemperatur: -30°C

| Filtrationszeit [s] | Kein Additiv | P6 (800 ppm) + P1 (300 ppm) | P7 (1370 ppm) + P1 (200 ppm) | P6 (800 ppm) + V1 (300 ppm) |
|---|---|---|---|---|
| 0 | 0 | 0 | 0 | 0 |
| 100 | 8,5 | 18 | 19 | 16 |
| 200 | 11 | 24,5 | 27 | 22 |
| 300 | 12,5 | 30 | 32 | 26,5 |
| 420 | 14 | 35 | 38 | 31 |
| 480 | 15 | 38 | 40 | 33 |
| 600 | 16,5 | 42 | 45 | 37 |
| 720 | 17,5 | 46 | 49 | 40 |
| 840 | 18,5 | 50 | 53 | 42,5 |
| 900 | 19,5 | 52,5 | 55 | 44 |

### Beispiel 11

### Filtrationsvolumina in ml aus einer Entparaffinierunqsstudie mit einem 300N-Feedstock einer Raffinerie aus Südamerika

Lösemittelsystem: 55% Methylethylketon / 45% Toluol
Feedstock : Lösemittel-Verhältnis = 1:3
Durchführung: 1) Mischen bei 70°C, 2) 30 min im Bad bei 25°C, 3) 60 min im Bad bei -18°C
Filtrationstemperatur: -18°C

| Filtrationszeit [s] | Kein Additiv | P6 (800 ppm) + P1 (150 ppm) | P6 (800 ppm) + V1 (400 ppm) |
|---|---|---|---|
| 0 | 0 | 0 | 0 |
| 50 | 17 | 38 | 31 |
| 100 | 24 | 55 | 45 |
| 150 | 29 | 68 | 56 |

### Vergleichsbeispiel

### Herstellung eines Polybehenylacrylates V1

In einem Dreihalskoben ausgestattet mit Säbelrührer und Rückflusskühler werden 255 g Behenylacrylat (z.B. auf Basis Behenyl Acrylat 45% der Sidobre Sinova), 45 g 100 N-Öl und 0,13 g Dodecylmercaptan unter Stickstoffschutzgasatmosphäre vorgelegt und auf 80°C erwärmt. Anschließend werden 0,41 g t-Butylperpivalat und 0,25 g t-Butylperbenzoat zugegeben, um die Polymerisation zu starten. 2 Stunden nach Erreichen der Temperaturspitze werden

0,51 g t-Butylperbenzoat zugegeben, wonach bei 130°C 10-12 Stunden nachpolymerisiert wird.
ηₛₚ/C (CHCl₃, 20°C) = 42 ml/g
Verdickungswirkung (4,5 Gew.% in einem 150 N-Öl): 12,19 mm²/s

## Patentansprüche

1. Polymergemisch, **dadurch gekennzeichnet, dass** es ein oder mehrere Copolymere bestehend aus radikalisch polymerisierbaren Monomeren der nachstehenden Formeln A und B: 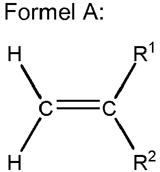 wobei
R¹=H,
R² = phenyl, 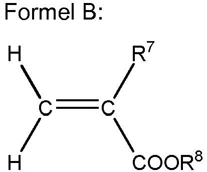
wobei R⁷ = H oder CH₃,
und der Rest R⁸ = lineare oder verzweigte Alkylreste mit C₁₈-C₂₄,
und ein oder mehrere weitere Homo oder Copolymere, die Polyalkylmethacrylate sind und Alkylsubstituenten der Kettenlänge C₁-C₂₄ aufweisen,
enthält.

2. Polymergemisch nach Anspruch 1, **dadurch gekennzeichnet, dass** die weiteren Homo- oder Copolymere Alkylsubstituenten der Kettenlänge C₁₂-C₁₈ aufweisen.

3. Polymergemisch nach Anspruch 1 oder 2, **dadurch gekennzeichnet, dass** das Monomer A Styrol ist und das Monomer B Behenyl Acrylat ist.

4. Polymergemisch nach einem der vorstehenden Ansprüche 1 bis 3, **dadurch gekennzeichnet, dass** das Verhältnis der Copolymere und der weiteren Homo- oder Copolymere, von 1 : 20 bis 20 :1 beträgt.

5. Polymergemisch, nach Anspruch 1, **dadurch gekennzeichnet, dass** das weitere Homo- oder Copolymere ein Polyalkylmethacrylat ist, welches bis zu 20 Gew.% C₁₀-C₁₀-Methacrylate enthält.

6. Polymergemisch bestehend aus einem Copolymer bestehend aus radikalisch polymerisierbaren Monomeren der nachstehenden Formeln A und B: 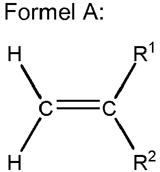 wobei
R¹=H,
R² = phenyl, 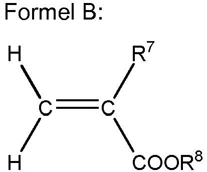
wobei R⁷ = H oder CH₃,
und der Rest R⁸ = lineare oder verzweigte Alkylreste mit C₁₈-C₂₄,
und einem weiteren Copolymer, das Polyalkylmethacrylat ist und Alkylsubstituenten der Kettenlänge C₁₂-C₁₈ aufweist.

7. Verwendung des Polymergemischs nach einem der vorstehenden Ansprüche 1 bis 6, zur Solvententparaffinierung von paraffinhaltigen Mineralöldestillaten.

8. Dewaxing-Additiv, **dadurch gekennzeichnet, dass** es ein Polymergemisch gemäß einem oder mehreren der Ansprüche 1 bis 6 sowie gegebenenfalls weitere übliche Zusatzstoffe für Dewaxing-Additive enthält.

9. Dewaxing-Additiv nach Anspruch 8, **dadurch gekennzeichnet, dass** es eine Lösung des Polymergemischs in einem Öl vom paraffinischen oder naphthenischen Typ oder aber in einem organischen Lösemittel ist.

10. Dewaxing-Additiv nach Anspruch 9, **dadurch gekennzeichnet, dass** das organische Lösungsmittel Toluol, Xylol und/oder Naphtha ist.

11. Verfahren zur Lösungsmittelentparaffinierung wachshaltiger Raffinate, bei dem das Raffinat mit einem Lösungsmittel und einem Dewaxing-Additiv gemäß einem der Ansprüche 8 bis 10 versetzt und auf Temperaturen unter -20°C abgekühlt und das auskristallisierte Paraffinwachs über Trommelfilter abgetrennt wird.

12. Verfahren gemäß Anspruch 11 **dadurch gekennzeichnet, dass** als Lösungsmittel Methylethylketon-Toluol-Gemische, Dichlorethan-Dichlormethan-Gemische oder Propan eingesetzt werden.

13. Verfahren gemäß Anspruch 11 oder 12 **dadurch gekennzeichnet, dass** die eingesetzten Waschdestillate aus der Vakuumdestillation des Rohöls zunächst durch Lösungsmittelextraktion von Aromaten und Heterocyclen befreit werden.

14. Verfahren nach einem der vorstehenden Ansprüche 11 bis 13, **dadurch gekennzeichnet, dass** die Zusatzrate des Dewaxing-Additives 0,005 - 0,5% beträgt.

## Claims

1. Polymer mixture, **characterized in that** it comprises one or more copolymers consisting of free-radically polymerizable monomers of the following formulae A and B: 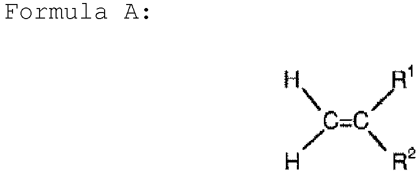 where
R¹ = H,
R² = phenyl, 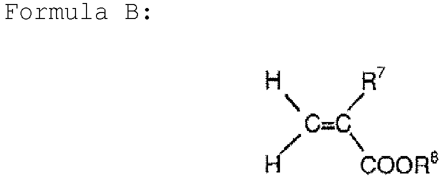
where R⁷ = H or CH₃
and the R⁸ radical = linear or branched alkyl radicals of C₁₈-C₂₄,
and one or more further homo- or copolymers which are polyalkyl methacrylates and have alkyl substituents of chain length C₁-C₂₄.

2. Polymer mixture according to Claim 1, **characterized in that** the further homo- or copolymers have alkyl substituents of chain length C₁₂-C₁₈.

3. Polymer mixture according to Claim 1 or 2, **characterized in that** the monomer A is styrene and the monomer B is behenyl acrylate.

4. Polymer mixture according to one of the preceding Claims 1 to 3, **characterized in that** the ratio of the copolymers and the further homo- or copolymers is 1:20 to 20:1.

5. Polymer mixture according to Claim 1, **characterized in that** the further homo- or copolymer is a polyalkyl methacrylate which contains up to 20% by weight of C₁-C₁₀ methacrylates.

6. Polymer mixture consisting of a copolymer consisting of free-radically polymerizable monomers of the following formulae A and B: 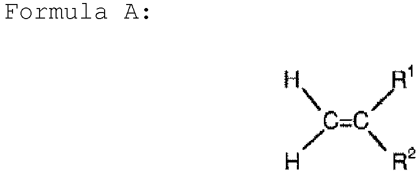 where
R¹ = H,
R² = phenyl, 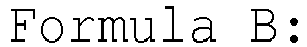 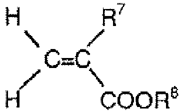
where R⁷ = H or CH₃
and the R⁸ radical = linear or branched alkyl radicals of C₁₈-C₂₄,
and a further copolymer which is polyalkyl methacrylate and has alkyl substituents of chain length C₁₂-C₁₈.

7. Use of the polymer mixture according to one of the preceding Claims 1 to 6 for solvent deparaffinization of paraffinic mineral oil distillates.

8. Dewaxing additive, **characterized in that** it contains a polymer mixture according to one or more of Claims 1 to 6, and also optionally further customary additives for dewaxing additives.

9. Dewaxing additive according to Claim 8, **characterized in that** it is a solution of the polymer mixture in an oil of the paraffinic or naphthenic type or else in an organic solvent.

10. Dewaxing additive according to Claim 9, **characterized in that** the organic solvent is toluene, xylene and/or naphtha.

11. Process for solvent deparaffinization of wax-containing raffinates, wherein the raffinate is admixed with a solvent and a dewaxing additive according to any of Claims 8 to 10 and cooled to temperatures of below -20°C and the paraffin wax which has crystallized out is removed by a drum filter.

12. Process according to Claim 11, **characterized in that** methyl ethyl ketone-toluene mixtures, dichloroethane-dichloromethane mixtures or propane are used as solvent.

13. Process according to Claim 11 or 12, **characterized in that** the wash distillates from vacuum distillation of crude oil that are used are initially freed of aromatics and heterocycles by solvent extraction.

14. Process according to one of the preceding Claims 11 to 13, **characterized in that** the addition rate of the dewaxing additive is 0.005-0.5%.

## Revendications

1. Mélange de polymères, **caractérisé en ce qu'**il contient un ou plusieurs comonomères constitués de monomères polymérisables par polymérisation radicalaire ayant les Formules A et B ci-après : 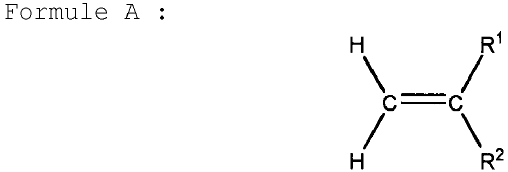 dans laquelle
R¹ = H
R² = phényle, 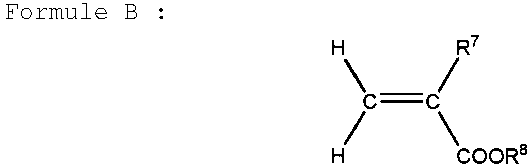
dans laquelle R⁷ = H ou CH₃,
et le radical R⁸ représente un groupe alkyle à chaîne droite ou ramifiée en C₁₈-C₂₄,
et un ou plusieurs autres homo- ou copolymères, qui sont des poly(méthacrylates d'alkyle) et comprennent des substituants alkyle ayant une longueur de chaîne en C₁-C₂₄.

2. Mélange de polymères selon la revendication 1, **caractérisé en ce que** les autres homo- ou copolymères présentent des substituants alkyle ayant une longueur de chaîne en C₁₂-C₁₈.

3. Mélange de polymères selon la revendication 1 ou 2, **caractérisé en ce que** le monomère A est le styrène, et le monomère B est l'acrylate de béhényle.

4. Mélange de polymères selon l'une des revendications précédentes 1 à 3, **caractérisé en ce que** le rapport des copolymères aux autres homo- ou copolymères est de 1:20 à 20:1.

5. Mélange de polymères selon la revendication 1, **caractérisé en ce que** l'autre homo- ou copolymère est un poly(méthacrylate d'alkyle), qui contient jusqu'à 20 % en poids de méthacrylates en C₁-C₁₀.

6. Mélange de polymères constitué d'un copolymère constitué de monomères polymérisables par polymérisation radicalaire, ayant les Formules A et B ci-après : 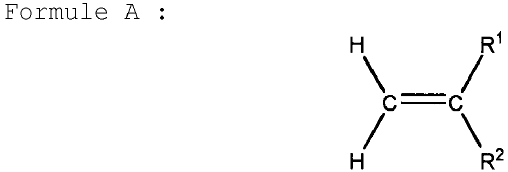 dans laquelle
R¹ = H
R² = phényle, 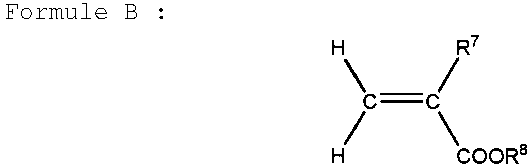
dans laquelle R⁷ = H ou CH₃,
et le radical R⁸ représente un groupe alkyle à chaîne droite ou ramifiée en C₁₈-C₂₄,
et d'un autre copolymère, qui est un poly(méthacrylate d'alkyle) et comprend des substituants alkyle ayant une longueur de chaîne en C₁₂-C₁₈.

7. Utilisation du mélange de polymères selon l'une des revendications précédentes 1 à 6 pour le déparaffinage aux solvants de distillats d'huiles minérales contenant des paraffines.

8. Additif de déparaffinage, **caractérisé en ce qu'**il contient un mélange de polymères selon l'une ou plusieurs des revendications 1 à 6, ainsi qu'éventuellement d'autres additifs usuels servant d'additifs de déparaffinage.

9. Additif de déparaffinage selon la revendication 8, **caractérisé en ce qu'**il s'agit d'une solution du mélange de polymères dans une huile du type paraffinique ou naphténique, ou cependant dans un solvant organique.

10. Additif de déparaffinage selon la revendication 9, **caractérisé en ce que** le solvant organique est le toluène, le xylène et/ou le naphta.

11. Procédé de déparaffinage aux solvants de raffinats contenant des paraffines, dans lequel le raffinat est additionné d'un solvant et d'un additif de déparaffinage selon l'une des revendications 8 à 10 et est refroidi à des températures inférieures à -20°C, la cire de paraffine séparée par cristallisation étant séparée sur un filtre à tambour.

12. Procédé selon la revendication 11, **caractérisé en ce qu'**on utilise en tant que solvants des mélanges méthyléthylcétone-toluène, des mélanges dichloréthane-dichlorométhane, ou du propane.

13. Procédé selon la revendication 11 ou 12, **caractérisé en ce que** les distillats paraffineux utilisés provenant de la distillation sous vide du pétrole brut sont débarrassés, d'abord par extraction aux solvants, des aromatiques et des composés hétérocycliques.

14. Procédé selon l'une des revendications précédentes 11 à 13, **caractérisé en ce que** le taux d'addition de l'additif de déparaffinage est de 0,005 à 0,5 %.
